Europäisches Patentamt

European Patent Office

Office européen des brevets

(11) Veröffentlichungsnummer: **0 047 939**
**A1**

(12) # EUROPÄISCHE PATENTANMELDUNG

(21) Anmeldenummer: **81106976.4**

(22) Anmeldetag: **05.09.81**

(51) Int. Cl.³: **B 65 D 35/02**
**B 29 C 27/20**

(30) Priorität: **12.09.80 DE 3034428**

(43) Veröffentlichungstag der Anmeldung:
**24.03.82 Patentblatt 82/12**

(84) Benannte Vertragsstaaten:
**AT BE CH FR GB IT LI LU NL SE**

(71) Anmelder: **Schulze, Kurt**
**Delfter Strasse 38**
**D-4190 Kleve(DE)**

(72) Erfinder: **Schulze, Kurt**
**Delfter Strasse 38**
**D-4190 Kleve(DE)**

(74) Vertreter: **Gille, Christian, Dipl.-Ing. et al,**
**Redies, Redies, Türk & Gille, Patentanwälte**
**Brucknerstrasse 20**
**D-4000 Düsseldorf 13(DE)**

(54) **Mehrschichtige Kunststofftube und Verfahren zu deren Herstellung.**

(57) Es ist eine mehrschichtige diffusionsdichte oder diffusionsarme Kunststofftube (1) offenbart, die einen Kopf (4) mit zwei ineinandersteckenden Tubenkörpern (2 und 3) aufweist, von denen der innere (2) formstabil ausgebildet ist und aus Kunststoff und/oder Metall-Folie besteht. Der einstückig mit dem Kopf (4) versehene äußere Tubenkörper (3) besteht aus einer nahtlosen Hülle aus schrumpffähigem Material und ist auf den inneren Tubenkörper (2) aufschrumpfbar. Derartige Tuben (1) werden hergestellt, indem eine formstabile Verbundfolie auf einen Dorn (6) zu dem inneren Tubenkörper (2) gewickelt, ein nahtlos vorgeformter äußerer Tubenkörper (3) aus schrumpffähigem Material darüber gebracht, dann dieser äußere Tubenkörper (3) auf den inneren durch Wärmeeinwirkung aufgeschrumpft, der Dorn (6) herausgezozogen und die Tube (1) schließlich am offenen Ende (3a) zugeschweißt wird.

EP 0 047 939 A1

1 G 52 893

# Mehrschichtige Kunststofftube und Verfahren zu deren Herstellung

Die Erfindung betrifft eine mehrschichtige, diffusionsdichte bzw. diffusionsarme Kunststofftube mit den Merkmalen des Oberbegriffes des Hauptanspruches. Außerdem betrifft die Erfindung ein Verfahren zum Herstellen derartiger Tuben.

Kunststofftuben sind insbesondere für kosmetische Artikel interessant. Die für derartige Tuben verwendeten Kunststoffe wie Polypropylen, Hochdruck- und Niederdruck-Polyäthylen, PVC, Äthylen-Vinylacetat (EVA) und dergleichen sind jedoch nicht diffusionsdicht, insbesondere nicht gegenüber Sauerstoff. Deshalb hat man durch gleichzeitiges Strangpressen verschiedener Kunststoffschichten mehrschichtige Tuben hergestellt, die zwar diffusionsdicht sind, jedoch hohe Herstellungskosten verursachen (CH-PS 396 753). Ein weiterer Nachteil dieser Art der Herstellung von mehrschichtigen Kunststofftuben besteht darin, daß verhältnismäßig viel Ausschuß anfällt.

Weiterhin ist es bekannt, diffusionsdichte bzw. diffusionsarme Kunststofftuben aus Mehrschichtfolien herzustellen (DE-OS 22 62 756). Die Mehrschichtfolie wird

0047939

dabei in Längsrichtung zum Tubenkörper entlang einer Überlappung verschweißt. Anschließend muß ein vorgeformtes Kopfstück angeschweißt werden, an welchem auch ein flexibler äußerer Tubenkörper angeschweißt ist, der die diffusionsdichte bzw. diffusionsarme eigentliche Kunststofftube umhüllt. Die Herstellung derartiger Kunststofftuben ist kostspielig. Die in Längsrichtung verlaufende Schweißnaht muß, wenn sie diffusionsdicht sein soll, verhältnismäßig dick ausgebildet werden und bleibt sichtbar (vergleiche auch DE-OS 29 30 783), wenn die diffusionsdichte oder diffusionsarme Kunststofftube nicht in einer schlauchförmigen Schutzhülle untergebracht wird (DE-OS 22 62 756), welche selbst nicht diffusionsdicht ist.

Einschichtige Kunststofftuben werden beispielsweise aus einem stranggepreßten Kunststoffschlauch hergestellt, der auf Länge geschnitten wird, woraufhin an ein Ende dieser Schlauchstücke ein separat hergestelltes Kopfstück angeschweißt werden muß und die Tube nach dem Füllen am anderen Ende durch eine quer verlaufende Schweißnaht geschlossen wird. Es ist aber auch bekannt, den Tubenkörper einstückig mit dem Kopfstück durch Tiefziehen aus einer Folie herzustellen (DE-OS 27 52 416). Derartige einschichtige Kunststofftuben sind jedoch nicht diffusionsdicht.

Der Erfindung liegt die Aufgabe zugrunde, eine preiswert herzustellende mehrschichtige, diffusionsdichte bzw. diffusionsarme, d.h. also gasdichte, Kunststofftube herstellen zu können.

Diese Aufgabe wird erfindungsgemäß bei einer Kunststofftube der eingangs genannten Gattung mit den Merkmalen des kennzeichnenden Teiles des Hauptanspruches gelöst. Außerdem wird diese Aufgabe mit einem Ver-

EPA- u. PCT-SATZSPIEGEL-PAPIER
HERMANN ARZT GMBH, MÜNCHEN, TEL. (089) 4480431

fahren mit den Merkmalen des Anspruches 4 gelöst. Vorteilhafte Ausgestaltungen der Erfindung sind Gegenstand der Unteransprüche.

Bei der erfindungsgemäßen Kunststofftube bildet der innere Tubenkörper die diffusionshemmende Schicht, während der äußere Tubenkörper den inneren Tubenkörper in der gewünschten Form hält und somit der Tube die gewünschte Gestalt gibt. Der äußere Tubenkörper besteht aus schrumpffähigem Material und wird mit dem Kopf der Tube aus einer nahtlosen Schlauchfolie in einer Hohlform geblasen, wobei der Kopf zusammen mit dem Gewindestück gebildet wird.

Die erfindungsgemäße Kunststofftube wird folgendermaßen hergestellt:

Auf einen Dorn wird eine diffusionsdichte bzw. diffusionsarme, d.h. also gasdichte Folie und insbesondere eine handelsübliche Verbundfolie gewickelt, welche vorzugsweise wenigstens zum Teil aus Aluminium besteht. Diese Folie weist einseitig eine Kunststoffbeschichtung aus Schmelzkleber auf, die ganzflächig oder teilflächig aufgebracht sein kann. Bekannte Schmelzkleber sind Polyamide, Polyester und Polyurethane. Der mit der Folie, und zwar auch in seinem Kopfbereich, umwickelte Dorn wird anschließend in einen geblasenen Tubenkörper aus schrumpffähigem Material gesteckt, woraufhin das Ganze erhitzt wird. Der äußere Tubenkörper schrumpft unter Wärmeeinwirkung und umschließt dadurch fest den aus der Verbundfolie gebildeten inneren Tubenkörper. Die gegenseitige Haftung wird durch den Schmelzkleber, der einen niedrigeren Schmelzpunkt als die beiden Tubenkörper haben muß, bewirkt. Dann ist der Tubenrohling fertig und kann vom Dorn abgenommen werden.

Zum Verschließen der Tube wird das Tubenende, vorzugsweise nachdem die Tube gefüllt ist, zugeschweißt. Wünschenswert ist ein Verschweißen durch Infrarotbestrahlung, d.h. Erhitzung des Tubenendes und anschließendes Zusammenpressen zu der gewünschten Schweißnaht. Bei bekannten Mehrschichtfolien mit einer Metallschicht ist dies bisher nicht möglich, weil die Metallschicht die Wärme zu sehr ableitet und nicht ausreichend erweicht, um den Schweißvorgang nicht zu behindern. Vielmehr ist nur eine komplizierte und teure Hochfrequenzheizung für das Schließen dieser bekannten mehrschichtigen Tuben notwendig. Gemäß der vorliegenden Erfindung reicht eine einfache Infrarotheizung, wenn der aus Kunststoff bestehende äußere Tubenkörper länger als der aus Verbundfolie mit Aluminium gebildete innere Tubenkörper ist, weil das überstehende Ende des äußeren Tubenkörpers durch Infrarotbestrahlung erweicht werden kann, so daß sich nach Zusammenpressen des offenen Tubenendes die gewünschte Schweißnaht bildet. Nur weil der innere und der äußere Tubenkörper zunächst getrennt hergestellt und dann ineinandergesteckt werden, ist es möglich, den aus thermoplastischem Material bestehenden äußeren Tubenkörper länger als den inneren Tubenkörper auszubilden. Bei Herstellung einer Tube aus einer vorgefertigten Verbundfolie ist dies hingegen nicht möglich.

Der äußere Tubenkörper besteht in der Regel aus Polypropylen oder aus Hochdruck- oder Niederdruckpolyäthylen. Weniger gebräuchlich sind PVC und EVA.

Die Diffusionssperre, d.h. also der innere Tubenkörper, kann aus vielen Materialien bestehen, beispielsweise Polyamid, Polyester oder PVC. Die Aluminiumfolie kann dabei auf der Innenseite des inneren Tubenkörpers beliebig beschichtet sein.

Die beiden Tubenkörper können in allen für Tuben üblichen Formen hergestellt und zusammengebaut werden, so daß erfindungsgemäß auch konisch ausgebildete Tubenrohlinge hergestellt werden können, die sich für eine raumsparende Lagerung ineinanderstecken lassen.

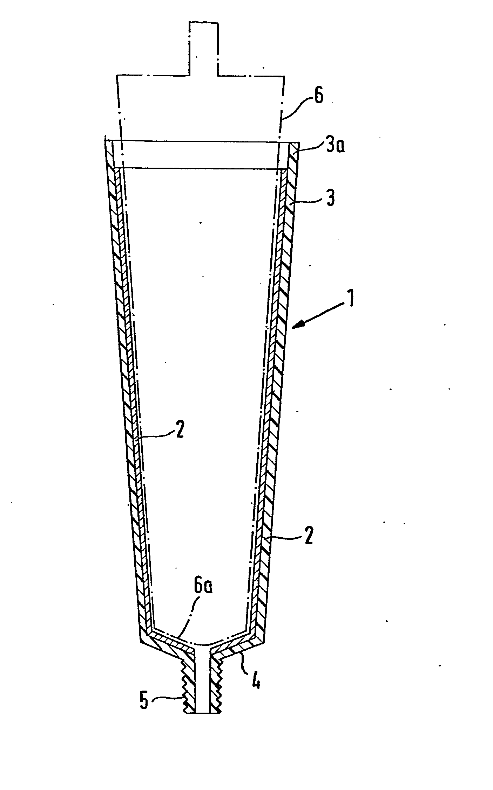

In der Zeichnung ist ein Ausführungsbeispiel einer erfindungsgemäßen Kunststofftube und der Dorn, auf der diese hergestellt wird, schematisch dargestellt.

Die Tube 1 besteht aus einem inneren Tubenkörper 2 und einem äußeren Tubenkörper 3, dessen hinteres Ende 3a ein Stück über den inneren Tubenkörper 2 übersteht. Der äußere Tubenkörper 3 ist einstückig mit einem Kopf 4 und einem daran befindlichen Gewindestück 5 aus schrumpffähigem Material wie thermoplastischem Kunststoff hergestellt und vorzugsweise geblasen.

Der innere Tubenkörper 2 ist aus einer diffusionsdichten und insbesondere einer Verbundfolie gebildet, die auf einen Dorn 6 aufgewickelt wird. Diese Folie kann dabei entweder in Längsrichtung geteilt und dann auf den Dorn 6 aufgerollt sein, so daß sie eine in Längsrichtung des Dornes 6 verlaufende Kontaktstelle (gestoßen oder überlappend) hat, oder aus streifenförmigem Material wendelförmig auf den Dorn 6 aufgewickelt sein. In jedem Fall wird auch das Stirnende 6a des Dornes 6 bewickelt, so daß der innere Tubenkörper 2 sich auch der Form des Kopfes 4 des äußeren Tubenkörpers 3 anpaßt. Die ineinandersteckenden Tubenkörper 2 und 3 sind mit einer zwischen beiden befindlichen, in der Zeichnung jedoch nicht dargestellten Klebstoffschicht zusammengehalten, beispielsweise mittels Schmelzkleber. Der äußere Tubenkörper 3 ist auf den inneren Tubenkörper 2 durch Wärmeeinwirkung aufgeschrumpft. Der Tubenkörper 2 befindet sich während des Aufschrumpfens des Tubenkörpers 3 auf dem Dorn 6. Unter Einfluß der Schrumpfwärme wird der Schmelzkleber aktiviert.

Nach Abnehmen der sich nach hinten konisch erweiternden Tube 1 vom Dorn 6 kann das hintere Ende 3a des äußeren Tubenkörpers 3 mit Infrarotstrahlung erwärmt und dann durch Zusammenpressen der gegenüberliegenden Abschnitte in Form einer Schweißnaht geschlossen werden. Das Verschließen kann auch nach Füllen der Tube erfolgen.

Der auf das Gewindestück 5 passende Schraubverschluß ist in der Zeichnung nicht dargestellt.

G/uh

0047939

1 G 52 893

Patentansprüche:

1. Mehrschichtige, diffusionsdichte bzw. diffusionsarme Kunststofftube (1), mit einem Kopf (4) und mit
zwei ineinandersteckenden Tubenkörpern (2 und 3), von
denen der innere (2) aus Kunststoff und/oder Metall-
Folie gebildet ist, d a d u r c h  g e k e n n -
z e i c h n e t, daß der äußere Tubenkörper (3) aus
einer nahtlosen Hülle aus schrumpffähigem Material
besteht, an welche der Kopf (4) einstückig angeformt
ist, und daß der äußere Tubenkörper (3) auf den inneren
Tubenkörper (2) aufschrumpfbar ist.

2. Tube nach Anspruch 1, dadurch gekennzeichnet, daß
die beiden Tubenkörper (2 und 3) wenigstens teilweise über ihre einander gegenüberliegenden Flächen
mittels Klebstoff untereinander verbunden sind.

3. Tube nach Anspruch 1 oder 2, dadurch gekennzeichnet,
daß der innere Tubenkörper (2) am hinteren Ende (3a)
der Tube (1) um wenigstens die Hälfte der Länge der
die Tube schließenden Schweißnaht kürzer als der
äußere Tubenkörper (3) ist.

4. Verfahren zum Herstellen von Tuben (1) gemäß einem der
Ansprüche 1 bis 3, dadurch gekennzeichnet, daß eine
formstabile Verbundfolie auf einen Dorn (6) zu einem
inneren Tubenkörper (2) gewickelt, ein nahtlos vorgeformter äußerer Tubenkörper (3) aus schrumpffähigem Material
darüber gebracht, dann der äußere Tubenkörper auf den
inneren durch Wärmeeinwirkung aufgeschrumpft, der
Dorn (6) herausgezogen und die Tube (1) schließlich am
offenen Ende (3a) zugeschweißt wird.

5. Verfahren nach Anspruch 4, dadurch gekennzeichnet, daß wenigstens auf einen Teil der Außenfläche des inneren Tubenkörpers (2) ein Schmelzkleber aufgebracht und der äußere Tubenkörper (3) bei einer über dem Schmelzpunkt des Schmelzklebers, jedoch unter dem Schmelzpunkt des Materials der beiden Tubenkörper (2 und 3) liegenden Temperatur auf den vorbereiteten inneren Tubenkörper (2) aufgeschrumpft wird.

G/uh

**0047939**

Nummer der Anmeldung

**EP 81 10 6976**

**Europäisches Patentamt**

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | <u>US - A - 3 946 905</u> (COGLIANO)<br>* Spalte 1, Zeilen 7-17; Spalte 1, Zeilen 52-57; Spalte 2, Zeilen 48-67; Spalte 5, Zeile 13 - Spalte 6, Zeile 8; Spalte 6, Zeilen 34-62; Spalte 7, Zeilen 22-60; Spalte 9, Zeile 27 - Spalte 10, Zeile 5; Figuren 1,2,4-9,13,14 *<br><br>-- | 1,2,4 | B 65 D 35/02<br>B 29 C 27/20 |
| | <u>US - A - 2 565 316</u> (G. LUCAS)<br>* Spalte 1, Zeilen 1-6; Spalte 1, Zeilen 14-51; Figuren 1-4 *<br><br>-- | 1,4 | RECHERCHIERTE SACHGEBIETE (Int. Cl.³) |
| | <u>US - A - 3 491 799</u> (W. FOLL)<br>* Spalte 2, Zeilen 18-66; Spalte 3, Zeile 70 - Spalte 4, Zeile 15; Spalte 4, Zeilen 28-45; Figuren 1-5 *<br><br>-- | 1,3-5 | B 65 D<br>B 29 C |
| | <u>FR - A - 1 238 919</u> (CIE DE PONT-AMOUSSON)<br>* Insgesamt *<br><br>-- | 1-4 | |
| | <u>CH - A - 348 544</u> (BRADLEY CONTAINER CORP.)<br>* Seite 1, Zeilen 29-58; Figuren 1,2 *<br><br>---- | 1,3 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |

| | Der vorliegende Recherchenbericht wurde für alle Patentansprüche erstellt. | &: Mitglied der gleichen Patentfamilie, übereinstimmendes Dokument |
|---|---|---|
| Recherchenort<br>Den Haag | Abschlußdatum der Recherche<br>11-12-1981 | Prüfer<br>MARTENS |

EPA form 1503.1 06.78